Europäisches Patentamt

European Patent Office

Office européen des brevets

(11) Publication number: **0 321 773**
**A2**

## EUROPEAN PATENT APPLICATION

(21) Application number: 88120299.8

(22) Date of filing: 05.12.88

(51) Int. Cl.⁴ **A47J 31/40**

(30) Priority: 22.12.87 IT 3406487 U

(43) Date of publication of application:
28.06.89 Bulletin 89/26

(84) Designated Contracting States:
CH DE ES FR GB IT LI

(71) Applicant: ZANUSSI GRANDI IMPIANTI S.p.A.
Viale Treviso 15
I-33170 Pordenone(IT)

(72) Inventor: **Donizetti, Gaetano**
**Via Baioni 31/c**
**I-24100 Bergamo(IT)**
Inventor: **Pesenti, Giancarlo**
**Via IV Novembre**
**I-24030 Almenno San Bartolomea**
**Bergamo(IT)**

(74) Representative: **Patentanwälte Grünecker,**
**Kinkeldey, Stockmair & Partner**
**Maximilianstrasse 58**
**D-8000 München 22(DE)**

(54) **Automatic percolator unit for the instantaneous preparation of hot beverages, particularly coffee, in variable amounts.**

(57) In an automatic percolator unit of the type described in GB Patent 1,488,446 (corresponding to IT Patent 1,010,946), means are provided for selectively adjusting the axial position of a percolator piston relative to an actuator lever to thereby vary the amount of the percolated beverage. Said means comprise a spur gear mounted in a support element for rotation by means of a reduction gear motor and provided with internal screw threads cooperating with external screw threads on the piston rod of the percolator piston for adjusting the axial position thereof relative to said actuator lever on which said support element is mounted.

FIG. 1

# AUTOMATIC PERCOLATOR UNIT FOR THE INSTANTANEOUS PREPARATION OF HOT BEVERAGES, PARTICULARLY COFFEE, IN VARIABLE AMOUNTS

The present invention relates to an automatic percolator unit for the instantaneous preparation of hot beverages, particularly espresso coffee, advantageously applicable to automatic machines for dispensing such beverages.

More specifically, the unit in question is of the type described in GB Patent no. 1,488,446 (corresponding to IT Patent no. 1,010,946), substantially comprising a support body having a boiler associated thereto and provided with a cavity the bottom of which is formed with a first opening for accommodating a filter therein, and a second or discharge opening; disposed in the cavity is a movable plate provided with a plurality of receptacles for the preparation of the beverage. Passing through a cover of the cavity are a percolator piston and a discharge piston both of which are vertically movable and articulated to a single actuator lever itself hinged to the cover. Also provided are means for the synchronized control of the rotation of the plate and the displacements of the pistons. These control means comprise a reduction gear motor having two outputs connected respectively to the plate and to the actuator lever, to the latter by means of a crank arm adapted to engage a cam opening of the lever. The cam opening has a profile permitting the pistons to be retained in an elevated position out of engagement with the receptacles of the plate during the rotation of the latter.

This percolator unit is particularly reliable and efficient in operation as well as compact and capable of being readily disassembled for the usual maintenance operations. The unit still has a shortcoming, however, in that it permits only a single fixed amount of the beverage to be dispensed during each cycle,this amount being only variable by manually adjusting the penetration depth of the percolator piston in the respective receptacle.

It would be desirable, and is the principal object of the invention, to improve a percolator unit of the type defined above in a manner permitting it to dispense automatically variable amounts of a beverage during each percolating cycle according to demand.

According to the invention, this object is obtained by an automatic percolator unit for the instantaneous preparation of variable amount of hot beverages, comprising a support body having a boiler associated thereto and provided with a cavity the bottom of which is formed with a first opening for accommodating a filter therein, and a second or discharge opening, a movable plate disposed in said cavity and provided with a plurality of receptacles for the preparation of the beverage, a cover for said cavity having a vertically movable percolator piston and a likewise vertically movable discharge piston passing therethrough, said percolator having its lower portion provided with a second filter, said pistons being articulated to an actuator lever itself hinged to said cover, and means for the synchronized control of the rotation of said plate and the displacement of said pistons relative to said plate.

According to the invention, this percolator unit is mainly characterized by additionally comprising automatic control means adapted to adjust said percolator piston between at least a first and a second axial position relative to said actuator lever in response to the manual actuation of per se known selector means for dispensing at least a first and a second amount of the beverage.

The characteristics and advantages of the invention will become more clearly evident from the following description, given by way of example with reference to the accompanying drawings, wherein:

figs. 1, 2 and 3 show diagrammatical cross-sectional views of the percolator unit according to the invention in different operative positions, and

fig. 4 shows an enlarged sectional elevation of a detail of the unit shown in figs. 1, 2 and 3.

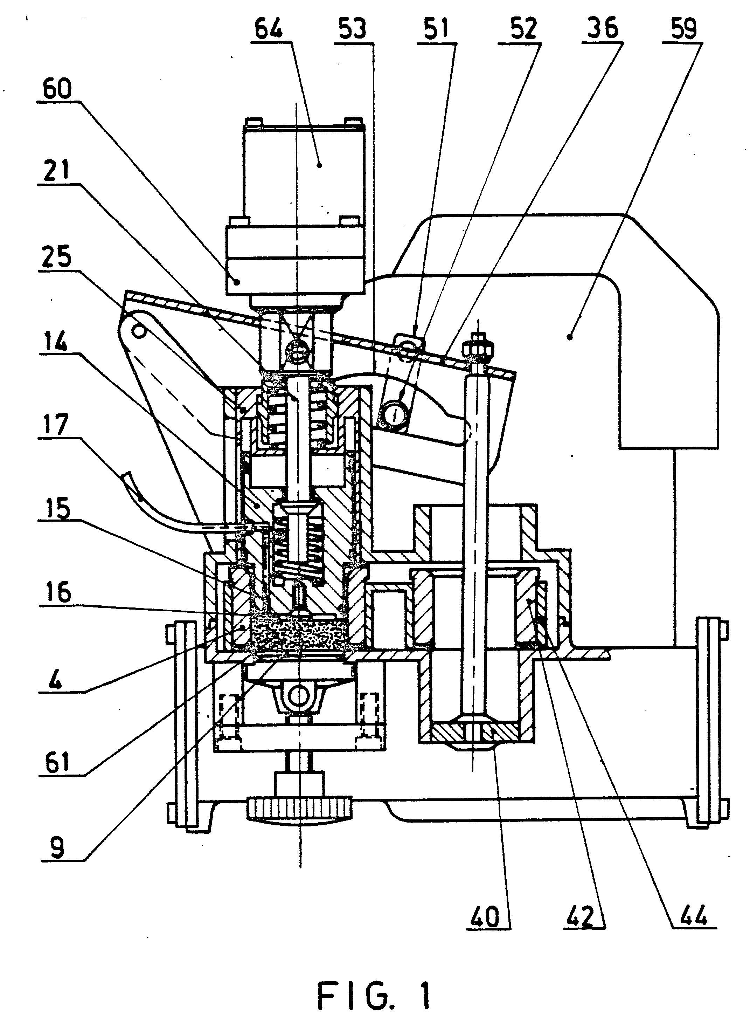

With reference to figs. 1, 2 and 3, the percolator unit shown therein is substantially identical in its basic construction to the one described in the cited GB Patent 1,488,446, to which reference may be had for better understanding.

In particular, identical components are designated by the same reference numerals.

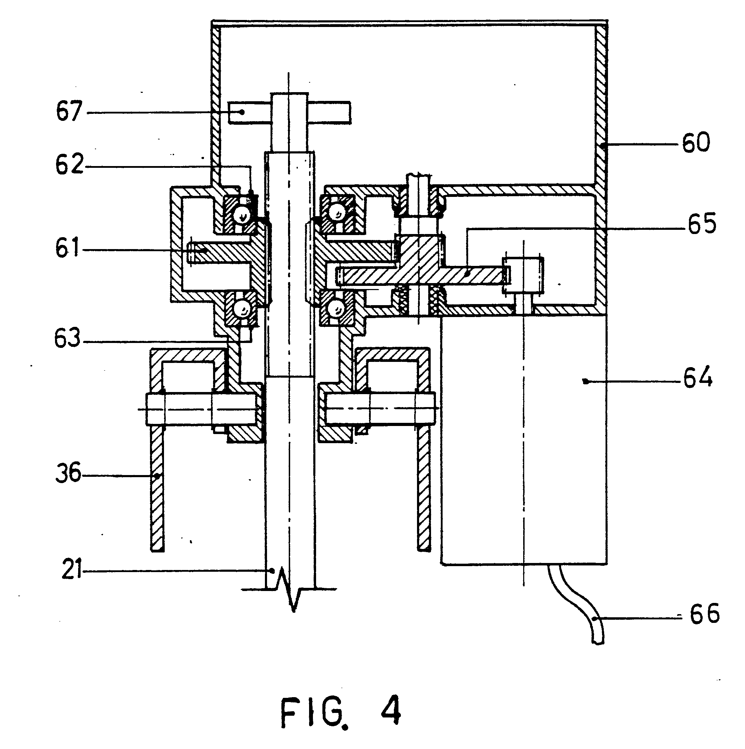

With reference also to fig. 4, the rod 21 of the percolator piston 14 is articulated to the actuator lever 36 by means of a box-shaped support element 60 provided with a cavity in which a spur gear 61 is mounted for rotation about a preferably vertical axis. Spur gear 61 is axially retained in support element 60 between upper and lower thrust bearings 62 and 63, respectively.

Mounted on support element 60 is a motor 64 (adapted to be actuated in synchronism with the reduction gear motor 59 as will be described), the electric connections of which are combined in a flexible cable 66. Motor 64 has an output pinion gear for rotating spur gear 61 by the intermediary of an intermediate reduction gear 65 meshing with the peripheral teeth of spur gear 61

The latter is of substantially cylindrical shape and provided with internal screw threads cooperating with external screw threads formed on percolator piston 14, particularly its piston rod 21, which passes through spur gear 61 and support element 60. Piston rod 21 is thus axially displaceable while being prevented from rotating relative to support element 60.

The operation of motor 64 and the resultant rotation of gears 65 and 61 causes piston rod 21 and thus percolator piston 14 to be axially displaced relatively to actuator lever 36 between a first and a second position preferably determined by an end position indicator of the electromechanic type for instance mounted on piston rod 21.

In a per se known and therefore not shown manner, the percolator unit is provided with manually operable selector means adapted to determine the dispensing of at least a first amount (corresponding for instance to a single cup of coffee) or at least a second amount (corresponding for instance to two cups) of the beverage during each operating cycle. Such selector means may obviously be associated to a programmed control device (likewise of a known type and therefore not shown) adapted in response to each selecting operation to determine the synchronized operation of reduction gear motors 59 and 65 as well as the amount of the beverage base material (for example freshly ground coffee) to be introduced into the receptacle 4 to be aligned below percolator piston 14, and the corresponding amount of hot water to be pumped from the boiler 18 through filter 16 of percolator piston 14 through hose 17 and passage 15.

The general function of the percolator unit described is substantially identical to that of the unit described in the cited GB Patent 1 488 446, to which reference may be had for better understanding.

The following explanations are therefore only directed to the functional differences resulting from the provisions of the present invention.

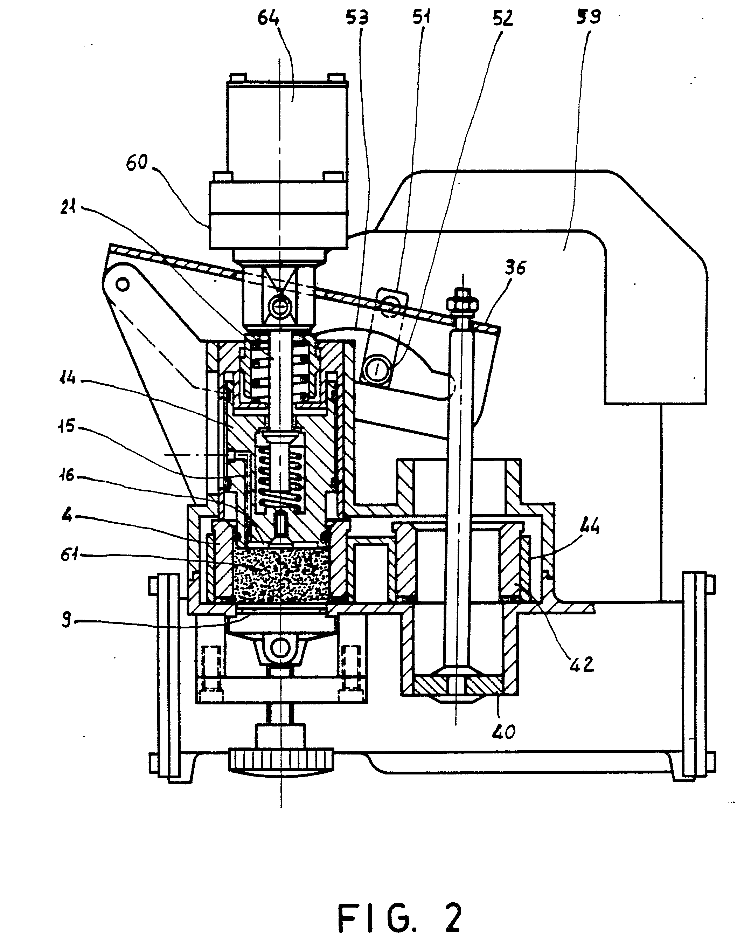

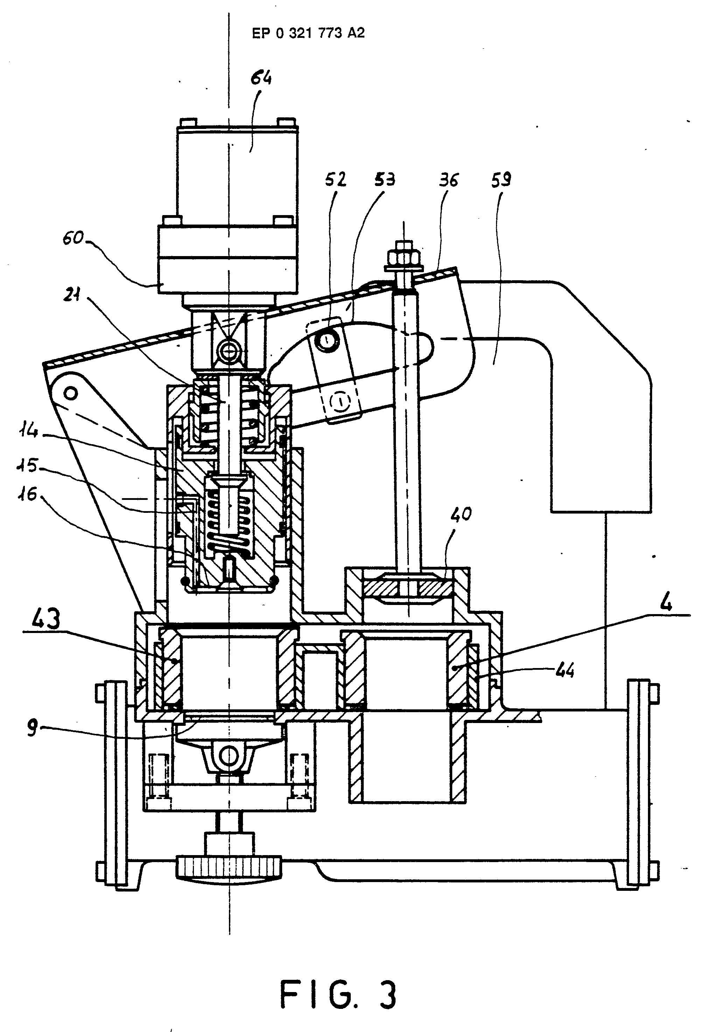

In the initial rest position of the percolator unit shown in fig. 1, the selector means may be manually operated for causing an amount of a beverage corresponding for instance to a single cup of coffee to be dispensed. Reduction gear motor 64 rotates spur gear 61 via reduction gear 65 to thereby displace piston rod 21 and thus percolator piston 14 to the position shown in fig. 2. Subsequently reduction gear motor 59 is operated to rotate crank arm 51, so that a cam follower 52 carried thereby and cooperating with the profile of cam opening 53 causes actuator lever 36 to move upwards to thereby raise percolator piston 14, discharge piston 40 and sleeve 25 to the top dead center position shown in fig. 3. During this operation a cake 61 of previously spent coffee grounds is detached from filter 9 by a suction effect in a per se known manner, whereby filter 9 is cleaned preparatory to the next operating cycle.

Subsequently, and also in a known manner, reduction gear motor 59 operates to rotate plate 44 with the receptacles 4, 42 and 43 thereon by a predetermined angle. This causes receptacle 43 to be aligned with percolator piston 14 after having previously been filled with an amount of freshly ground coffee corresponding to the selected amount of the beverage by a suitable programmed device (not shown). The receptacle 4 containing the cake of previously spent coffee grounds is at the same time aligned with discharge piston 40.

At this instant crank arm 51, which continues to be rotated, causes actuator lever 36 to be lowered together with discharge piston 40, percolator piston 14 and its associated elements, particularly sleeve 25.

Preferably at the same time, with a view to abbreviating the overall duration of the operating cycle, motor 64 is operated to rotate spur gear 61 in the opposite direction to thereby lower piston rod 21 and the associated percolator piston 14 further in the axial direction to the original lower end position. The entire percolator unit thus returns to the position shown in fig. 1, in which the cake of spent coffee grounds has been discharged and the preparation and dispensing of the beverage is finally carried out by feeding hot water from boiler 18 to the fresh coffee charge 61 via hose 17, passage 15 and percolator piston filter 16. The amount of water thus fed is of course selected to correspond to the selected amount of coffee.

Even when the selector means are manually operated for dispensing a major amount of the beverage, corresponding for instance to two cups of coffee, the operation of the percolator unit is substantially the same as described. The only difference consists in that motor 64 remains deenergized after the unit has successively be brought to the positions depicted in figs. 1, 2 and 3, so that percolator piston 14 remains in its axially upper position relative to actuator lever 36.

As a result, when percolator piston 14 is subsequently again lowered as described above, the unit assumes the position shown in fig. 2 rather than the one shown in fig.1 for carrying out the percolation process. In this case, a greater amount of freshly ground coffee has of course been supplied to receptacle 43, and a corresponding amount of hot water is fed to the coffee charge from boiler 18.

As a result, and thanks to the relative positioning of the mechanic elements and thus to the magnitude of the pressure exerted during the percolation process, one obtains also in this case a beverage, although a greater amount thereof, having the same physical and savoury characteristics as the smaller amount previously referred to.

The preceding description clearly shows the structural and functional simplicity of the percolator unit according to the invention, which is capable of dispensing on short notice automatically variable amount of a beverage according to demand while maintaining a remarkable constant quality. It is also noted in particular that the unit according to the invention is advantageously reliable thanks to the fact also that any mechanical forces acting in the axial direction on spur gear 61 through piston rod 21 are absorbed by thrust bearings 62 and 63.

The described percolator unit may of course undergo various modifications within the spirit of the invention.

As moreover all of the electromechanical selector and control devices for selecting the amounts of coffee and water and for the synchronized operation of reduction gear motors 59 and 64 are not part of the present invention, these components may be of any suitable type for this purpose.

## Claims

1. Automatic percolator unit for the instantaneous preparation of hot beverages in variable amounts, comprising a support body associated to a boiler and formed with a cavity the bottom of which is formed with a first opening for accommodating a filter therein and a second or discharge opening, a movable platform disposed in said cavity and carrying a plurality of receptacles for the preparation of the beverage, a cover for said cavity having a vertically movable percolator piston carrying a second filter at its lower end and a likewise vertically movable discharge piston passing therethrough, said pistons being articulated to a single actuator lever itself hinged to said cover, and means for the synchronized control of the rotation of said platform and the displacement of said pistons relative to said platform, characterized by additionally comprising automatic control means (60 to 65) for displacing said percolator piston (14) between at least a first and a second axial position relative to said actuator lever (36) in response to the manual operation of per se known selector means for dispensing at least a first and a second amount of the beverage.

2. An automatic percolator unit according to claim 1, characterized in that said automatic control means comprise a support element (60) articulated to said actuator lever (36) and supporting at an axially fixed position therein a spur gear (61) cooperating with a screw-threaded portion of the piston rod (21) of said percolator piston (14) and adapted to be rotated in synchronism with said reduction gear motor (59) for displacing said percolator piston (14) between said first and second axial positions.

3. An automatic percolator unit according to claim 2, characterized in that said spur gear (61) is adapted to be rotated in synchronism with said reduction gear motor (59) by means of an additional motor (64) fixedly mounted on said support element (60).

4. An automatic percolator unit according to claim 2, characterized in that said spur gear (61) is mounted in said support element (60) with its axis of rotation substantially vertical and coincident with the axis of said percolator piston (14), the piston rod (21) of the latter passing through said support element (60) and said spur gear (61), said screw-threaded portion of said piston rod cooperating with a corresponding internal screw-thread of said spur gear (61).

5. An automatic percolator unit according to claim 4, characterized in that said spur gear (61) is supported by said support element (60) at an axially fixed position by upper and lower thrust bearings (62, 63, respectively).

FIG. 1

FIG. 2

FIG. 3

FIG. 4